(19) Europäisches Patentamt / European Patent Office / Office européen des brevets

(11) **EP 2 871 903 B1**

(12) **FASCICULE DE BREVET EUROPEEN**

(45) Date de publication et mention
de la délivrance du brevet:
**26.09.2018 Bulletin 2018/39**

(51) Int Cl.:
***H04W 74/08*** *(2009.01)*

(21) Numéro de dépôt: **14191422.6**

(22) Date de dépôt: **03.11.2014**

(54) **PROCÉDÉ ET SYSTÈME D'ACCÈS MULTIPLE AVEC MULTIPLEXAGE FRÉQUENTIEL DE PLUSIEURS REQUÊTES D'AUTORISATION D'ENVOI DE DONNÉES PAR NOEUD SOURCE**

MEHRFACHZUGANGSVERFAHREN UND -SYSTEM MIT FREQUENZIELLEM MULTIPLEXEN MEHRERER AUTORISIERUNGSANFRAGEN ZUR DATENÜBERTRAGUNG ÜBER EINEN QUELLENKNOTEN

MULTIPLE ACCESS METHOD AND SYSTEM WITH FREQUENCY MULTIPLEXING OF A PLURALITY OF AUTHORISATION REQUESTS FOR SENDING DATA BY A SOURCE NODE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.11.2013 FR 1360874**

(43) Date de publication de la demande:
**13.05.2015 Bulletin 2015/20**

(73) Titulaire: **Commissariat à l'Énergie Atomique et aux Énergies Alternatives**
**75015 Paris (FR)**

(72) Inventeurs:
• **Mawlawi, Baher**
**38000 Grenoble (FR)**
• **Dore, Jean-Baptiste**
**38950 Saint Martin-Le-Vinoux (FR)**
• **GORCE, Jean-Marie**
**01600 MASSIEUX (FR)**

(74) Mandataire: **Brevalex**
**95, rue d'Amsterdam**
**75378 Paris Cedex 8 (FR)**

(56) Documents cités:
**US-A1- 2011 317 633**

• **GEBRESELASSIE HAILE ET AL: "C-OFDMA: Improved Throughput for Next Generation WLAN Systems Based on OFDMA and CSMA/CA", INTELLIGENT SYSTEMS MODELLING&SIMULATION (ISMS), 2013 4TH INTERNATIONAL CONFERENCE ON, IEEE, 29 janvier 2013 (2013-01-29), pages 497-502, XP032364326, DOI: 10.1109/ISMS.2013.121 ISBN: 978-1-4673-5653-4**
• **JUNWOO JUNG ET AL: "Group Contention-Based OFDMA MAC Protocol for Multiple Access Interference-Free in WLAN Systems", IEEE TRANSACTIONS ON WIRELESS COMMUNICATIONS, IEEE SERVICE CENTER, PISCATAWAY, NJ, US, vol. 11, no. 2, 1 février 2012 (2012-02-01), pages 648-658, XP011414999, ISSN: 1536-1276, DOI: 10.1109/TWC.2011.122211.102316**

**EP 2 871 903 B1**

**Description**

**DOMAINE TECHNIQUE**

Le domaine de l'invention est celui de l'accès multiple à une bande de fréquence d'un réseau de communication avec écoute de porteuse et évitement de collision.

**ÉTAT DE LA TECHNIQUE ANTÉRIEURE**

L'écoute de porteuse et l'évitement de collision connue sous l'acronyme CSMA/CA (« Carrier Sense Multiple Access / Collision Avoidance») est un protocole d'accès multiple qui peut être utilisé dans les systèmes de radiocommunications pour gérer l'allocation de la ressource radio.

Ce protocole est utilisé pour éviter des collisions entre de multiples utilisateurs (noeuds sources) souhaitant accéder en même temps à un point d'accès commun (noeud destinataire) sur la liaison montante.

Dans une mise en oeuvre de ce protocole, un noeud source souhaitant émettre des données écoute le canal de communication. Si le canal est occupé, une durée (exprimée en nombre de tranches horaires) d'un compteur d'attente (connu sous le nom de « backoff counter ») est choisie de manière aléatoire dans un intervalle [0, CW-1], où CW représente une fenêtre de contention. Le compteur d'attente est décrémenté de 1 à chaque fois que le canal est détecté comme étant disponible sur une durée DIFS (« Distributed Inter-Frame Space »). Le compteur d'attente est arrêté lorsque le canal est occupé, et reprend lorsque le canal est de nouveau disponible sur la durée DIFS au moins.

Lorsque le compteur d'attente atteint zéro, le noeud source transmet un message de requête d'autorisation d'envoi de données RTS (« Request To Send ») au noeud destinataire, et attend de recevoir un message d'autorisation d'envoi de données CTS (« Clear To Send ») du noeud destinataire avant d'émettre les données. A réception de toutes les données émises, et immédiatement après expiration d'une durée SIFS (« Short Inter-Frame Space»), le noeud destinataire envoie un message d'acquittement ACK (pour « ACKnowledgment »).

La fenêtre de contention CW est un entier compris dans un intervalle [$CW_{min}$, $CW_{max}$]. Cette fenêtre CW est initialement fixée à la valeur minimale $CW_{min}$. Chaque fois qu'un noeud source est impliqué dans une collision, il augmente son temps d'attente en doublant la fenêtre CW, jusqu'à la valeur maximale $CW_{max}$. A contrario, en cas de succès d'une transmission, le noeud source réduit la fenêtre CW à sa valeur minimale $CW_{min}$.

Un système CSMA/CA en fonctionnement mono-canal conventionnel présente l'avantage de ne nécessiter ni signalisation pour la requête de bande passante, ni allocation selon un accès planifié. En revanche, son efficacité est assez faible dans la mesure où ses performances se dégradent rapidement lorsque le nombre de noeuds sources augmente. Cette limitation peut être surmontée en ayant recours à un accès multiple par répartition sur différentes sous-bandes selon lequel plusieurs noeuds sources peuvent transmettre simultanément sur différentes sous-bandes, les noeuds sources connaissant l'état de disponibilité de chacune des sous-bandes à chaque instant. Cet accès multiple par répartition sur différentes sous-bandes exploite par exemple la méthode d'accès OFDMA (« Orthogonal Frequency Division Multiple Access ») selon laquelle la ressource spectrale (bande passante) est divisée en un ensemble de sous-porteuses orthogonales. Cet ensemble de sous-porteuses est lui-même divisé en sous-ensembles, chaque sous-ensemble de sous-porteuses constituant une sous-bande formant un canal de communication. Les noeuds sources s'affrontent ainsi pour l'accès à la ressource à la fois dans le temps et en fréquence.

Un système CSMA/CA en fonctionnement multi-canal est par exemple connu de l'article de J. W. Chong, Y. Sung, and D. K. Sung, intitulé "RawPEACH: Multiband CSMA/CA-Based Cognitive Radio Networks", Communications and Networks, Journal of, vol. 11, no. 2, pp. 175-186, 2009. Selon ce système, la bande passante allouée B est divisé en $N_{CH}$ sous-bandes, et chaque sous-bande est divisée en tranches horaires de durée $T_s$, les frontières entre tranches horaires étant synchronisées entre les sous-bandes. Ce système vise plus particulièrement à assurer un certain niveau de qualité de service pour certains utilisateurs de haute priorité (qualifiés d'utilisateurs primaires). Une canalisation est ainsi réservée à chaque utilisateur primaire qui consiste à lui fournir un canal sans compétition, orthogonal aux autres canaux, consistant en une séquence de sous-bandes sur lesquelles il peut transmettre ses données. En référence à la figure 2 de ce document, trois canaux sans compétition A, B et C sont définis. Le canal A saute entre les sous-bandes B1, B3 et B1, mais l'utilisateur auquel ce canal est assigné ne transmet que de t à t+$T_{f,p}$, de sorte que ce canal A est libéré à $T_{f,p}$. Le canal C saute entre les sous-bandes B3, B1 et B2, et l'utilisateur auquel ce canal est assigné transmet sur chacun des trois intervalles représentés.

Si le nombre d'utilisateurs primaires est supérieur au nombre $N_{CH}$ de sous-bandes, l'orthogonalité entre les utilisateurs primaires ne peut être maintenue. Ainsi le nombre d'utilisateurs est au plus égal au nombre $N_{CH}$ de sous-bandes. Dès lors ce système nécessite un contrôle d'admission pour rejeter une requête d'un utilisateur visant à être traité comme utilisateur primaire lorsque tous les canaux primaires sont utilisés. L'utilisateur ainsi rejeté peut alors initier une session en tant qu'utilisateur secondaire de moindre priorité.

Dans des conditions de trafic faible ou moyen, il est probable que les ressources ne soient pas toutes entièrement occupées par des utilisateurs primaires. Ces ressources en temps et/ou en fréquence peuvent alors être utilisées pour servir des utilisateurs secondaires. Les auteurs de cet article proposent d'implémenter, pour les utilisateurs secondaires, le protocole CSMA/CA mono-bande conventionnel sur chacune des sous-bandes, en l'adaptant simplement pour que les compteurs d'attente des utilisateurs secondaires soient mis en pause lorsque toutes les sous-bandes sont occupées du fait de transmission par des utilisateurs primaires. Si au moins une des sous-bandes est détectée comme étant non occupée par un utilisateur primaire, les utilisateurs secondaires décrémentent chacun leur compteur d'attente de 1. Lorsqu'un compteur d'attente atteint zéro, l'utilisateur secondaire associé commence à transmettre ses données sur une sous-bande sélectionnée aléatoirement parmi l'au moins une sous-bande non occupée par un utilisateur primaire. Si plus d'un utilisateur secondaire transmet simultanément des données sur la même sous-bande, une collision intervient.

Un autre exemple de système CSMA/CA en fonctionnement multi-bandes est donné par la publication US 2009/0196273 A1 qui fournit une autre méthode de gestion du compteur d'attente. Dans cette publication, si l'une des sous-bandes est détectée comme étant disponible sur une durée correspondant à un créneau d'attente, un noeud source décrémente son compteur d'attente d'une valeur correspondant au nombre de sous-bandes disponibles. Lorsque le compteur d'attente d'un noeud source atteint zéro, le noeud source sélectionne aléatoirement l'une des sous-bandes disponibles et transmet ses données. Les frontières des créneaux d'attente sont synchronisées entre les différentes sous-bandes et un noeud source n'est autorisé à commencer l'attente ou à transmettre qu'au début de chaque créneau.

US 2011/317633 A1 porte sur un système dans lequel des noeuds sources concourent pour accéder à une ou plusieurs sous-bandes d'une bande de fréquence. Pour ce faire, un noeud source transmet un seul message M-RTS de requête d'autorisation d'envoi de données sur la sous-bande, ce message étant transmis sur une sous-porteuse de la sous-bande.

JUNWOO JUNG ET AL, "Group Contention-Based OFDMA MAC Protocol for Multiple Access Interference-Free in WLAN Systems", IEEE TRANSACTIONS ON WIRELESS COMMUNICATIONS, IEEE SERVICE CENTER, PISCATAWAY, NJ, US, (20120201), vol. 11, no. 2 décrit également un système dans lequel des noeuds sources concourent pour accéder à une ou plusieurs sous-bandes d'une bande de fréquence. Pour ce faire, un noeud source transmet un seul message de requête d'autorisation d'envoi de données sur la sous-bande.

## EXPOSÉ DE L'INVENTION

L'invention a pour objectif de fournir une technique permettant d'améliorer les capacités de transmission d'un système CSMA/CA, et propose à cet effet un procédé selon la revendication 1. Certains aspects préférés mais non limitatifs de ce procédé sont définis dans les revendications 2 à 11.

L'invention porte également sur un procédé selon la revendication 12.

L'invention s'étend également à un noeud destinataire ainsi qu'à un noeud source configurés pour la mise en oeuvre de ces procédés, ainsi qu'à un réseau de communication comprenant de tels noeuds. Elle s'étend enfin à un produit programme d'ordinateur comprenant des instructions de code pour l'exécution des étapes de ces procédés lorsque ledit programme est exécuté sur un ordinateur.

## BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :

- les figures 1 à 3 sont des schémas illustrant les données transitant sur les différentes sous-bandes dans un premier mode de réalisation de l'invention ;
- la figure 4 est un schéma illustrant les données transitant sur les différentes sous-bandes dans un second mode de réalisation de l'invention réalisant une transmission consécutive des données de deux des noeuds sources ;
- les figures 5a et 5b représentent le débit de saturation en fonction du nombre de noeuds sources dans un système comprenant six sous-bandes avec la transmission, par un noeud source, de deux messages de requête d'autorisation d'envoi de données sur le canal de communication sur deux sous-bandes, respectivement d'un message de requête d'autorisation d'envoi de données sur le canal de communication sur une sous-bande ;
- la figure 5c représente le débit de saturation en fonction du nombre de noeuds sources dans un système comprenant six sous-bandes dans le cadre d'une variante de l'invention où le nombre de messages de requête d'autorisation d'envoi de données sur le canal de communication transmis par un noeud source dépend du nombre de noeud sources ;
- la figure 6 représente la probabilité de collision en fonction du nombre de noeuds sources dans un système comprenant six sous-bandes avec la transmission, par un noeud source, soit de deux messages de requête d'autorisation d'envoi de données sur le canal de communication sur deux sous-bandes, soit d'un message sur une sous-bande ;

- la figure 7 illustre un exemple de loi de probabilité de distribution sur les différentes sous-bandes des messages de requête d'autorisation d'envoi de données sur le canal de communication.

## EXPOSÉ DÉTAILLÉ DE MODES DE RÉALISATION PARTICULIERS

L'invention porte selon un premier aspect sur un procédé d'accès multiple à une bande de fréquence d'un canal de communication d'un réseau de communication, par exemple un réseau sans fil, avec écoute de porteuse et évitement de collision.

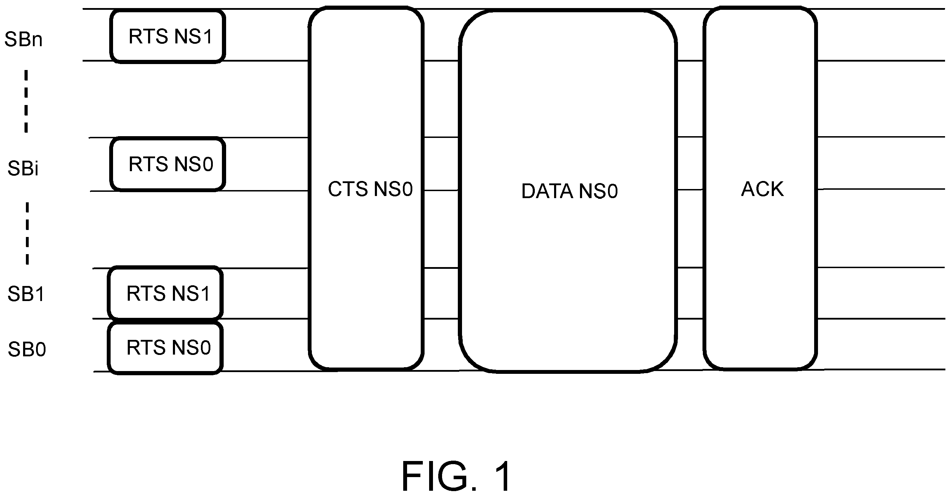

En référence aux figures 1 à 4, la bande de fréquence est découpée en un ensemble de sous-bandes SB0, SB1, ..., SBi, ..., SBn du canal de communication, lesdites sous-bandes étant utilisées comme cela sera détaillé par la suite pour la transmission depuis un noeud source NS0, NS1, NS2 vers un noeud destinataire de messages de requête d'autorisation d'envoi de données sur le canal de communication « RTS NS0 », « RTS NS1 », « RTS NS2 ». Plus particulièrement, l'invention propose de réaliser un multiplexage en fréquence pour la transmission de messages de requête d'autorisation d'envoi de données sur le canal de communication, plusieurs noeuds sources pouvant transmettre simultanément de tels messages sur différentes sous-bandes.

Ce multiplexage en fréquence exploite par exemple la méthode d'accès OFDMA (« Orthogonal Frequency Division Multiple Access ») selon laquelle la ressource spectrale (bande passante) est divisée en un ensemble de sous-porteuses orthogonales. Cet ensemble de sous-porteuses est lui-même divisé en sous-ensembles, chaque sous-ensemble de sous-porteuses constituant une sous-bande.

Ce multiplexage en fréquence peut également exploiter d'autres types de modulation multi-porteuses, comme par exemple un système multi-porteuses à base de bancs de filtres FBMC (« Filter Bank based Multi-Carrier »).

Dans le cadre de l'invention, chaque noeud source peut disposer d'un compteur d'attente dont la valeur est modifiée (typiquement décrémentée de 1) lorsque le canal de communication est détecté comme étant disponible sur une durée donnée (durée DIFS dans le cadre du protocole CSMA/CA). Le canal de communication est disponible lorsqu'aucune transmission n'a lieu sur l'ensemble des sous-bandes SB0, SB1, ..., SBi, ..., SBn du canal de communication.

Lorsque le compteur d'attente d'un noeud source atteint une valeur prédéterminée (typiquement zéro), le noeud source transmet ses données après mise en oeuvre d'un mécanisme RTS/CTS modifié.

Il a été proposé dans la demande de brevet français déposée le 3 juillet 2013 sous le numéro 13 56518 un mécanisme RTS/CTS modifié selon lequel le noeud source transmet un message de requête d'autorisation d'envoi de données sur le canal de communication (message de type RTS) sur une ou plusieurs sous-bandes formant un sous-ensemble dudit ensemble de sous-bandes du canal de communication (en d'autres termes, le message n'est pas transmis sur toutes les sous-bandes).

Dans le cadre de la présente invention, il est prévu un autre mécanisme RTS/CTS modifié selon lequel le noeud source peut transmettre une pluralité N de messages de requête d'autorisation d'envoi de données sur le canal de communication, chacun desdits N messages étant transmis sur l'une des sous-bandes du canal de communication.

A titre d'exemple, et en référence à la figure 1, le noeud source NS0 transmet une pluralité (N=2) de messages « RTS NS0 », à savoir un message sur la sous-bande SB0 et un message sur la sous-bande SBi. Le noeud source NS1 transmet également une pluralité (N=2) de messages « RTS NS1 », à savoir un message sur la sous-bande SB1 et un message sur la sous-bande SBn.

Dans une variante de réalisation qui sera exposée par la suite, ce nombre N de messages de type RTS qu'un noeud source peut transmettre chacun sur l'une des sous-bandes du canal de communication peut être modifié au cours du temps. De telle sorte, l'invention s'étend non seulement au cas de figure où un noeud source transmet toujours plusieurs messages de type RTS dont la quantité peut être modifiée, mais également au cas de figure où sous certaines conditions le noeud source ne transmet qu'un seul message de type RTS et où sous d'autres conditions le noeud source transmet une pluralité de messages de type RTS.

L'invention permet de réduire la probabilité de collision par N pour chacun des noeuds sources. Dans le mécanisme RTS/CTS modifié faisant l'objet de la demande de brevet mentionnée ci-dessus, la requête d'autorisation d'envoi de données sur le canal de communication émise par un noeud source est incorrectement reçue par le noeud destinataire dès lors que le message correspondant entre en collision avec un ou plusieurs autres messages. Dans le mécanisme RTS/CTS modifié selon l'invention, la requête d'autorisation d'envoi de données sur le canal de communication émise par un noeud source ne peut être incorrectement reçue par le noeud destinataire que si tous les N messages correspondants sont entrés en collision avec d'autres messages.

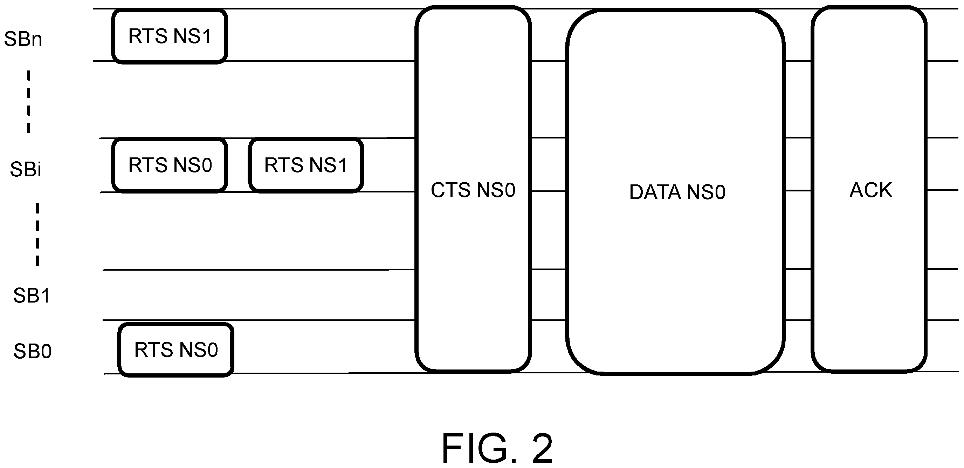

La figure 2 représente à cet égard un exemple de collision dans une sous-bande qui n'affecte pas la correcte réception par le noeud destinataire d'une requête d'autorisation d'envoi de données sur le canal de communication émise par un noeud source. Dans cet exemple, le noeud source NS0 transmet un message « RTS NS0 » sur la sous-bande SB0 et un message « RTS NS0 » sur la sous-bande SBi. Le noeud source NS1 transmet quant à lui un message « RTS NS1 » sur la sous-bande SBi et un message « RTS NS1 » sur la sous-bande SBn. Les messages « RTS NS0 » et « RTS NS1 » entrent en collision sur la sous-bande SBi. Toutefois, du fait de la diversité offerte par la transmission de plusieurs messages de type RTS sur plusieurs sous-bandes, on n'observe pas de collision sur la sous-bande Sbn, ni de collision sur la sous-bande SB0. Les messages « RTS NS0 » et « RTS NS1 », respectivement transmis sur la sous-bande SB0 et sur la sous-bande SBn, sont donc correctement reçus par le noeud destinataire.

Dans un mode de réalisation, des sous-bandes pour la transmission par un noeud source des messages de requête d'autorisation d'envoi de données sur le canal de communication sont imposées, par exemple via une liste de sous-bandes dont le noeud source peut prendre connaissance.

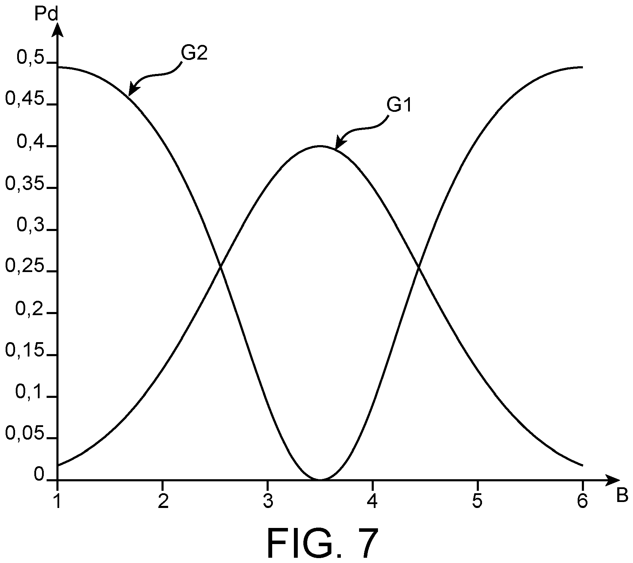

Dans un autre mode de réalisation, le noeud source procède à une sélection de la ou des sous-bandes pour la transmission du ou des messages de requête d'autorisation d'envoi de données sur le canal de communication. La sélection peut s'opérer suivant une loi de probabilité de distribution sur chacune des sous-bandes du canal de communication ou encore sur chacune des sous-bandes d'un sous-ensemble de l'ensemble de sous-bandes imposé au noeud source. La loi de probabilité peut être une loi aléatoire. Cette loi peut prendre des formes plus élaborées, comme cela est par exemple représenté sur la figure 7 où l'on retrouve une loi de distribution sur six sous-bandes B selon que le noeud source appartient à un premier groupe G1 couvrant les sous-bandes 2 -5 ou à un second groupe G2 couvrant les sous-bandes 1 et 6. Dans cet exemple, les noeuds source du premier groupe G1 transmettent sur les sous-bandes 2-5 avec les probabilités de distribution Pd respectives suivantes : 0,15, 0,35, 0,35 et 0,15, tandis que les noeuds source du second groupe G2 transmettent sur les sous-bandes 1 ou 6 avec une même probabilité de distribution Pd 0,5.

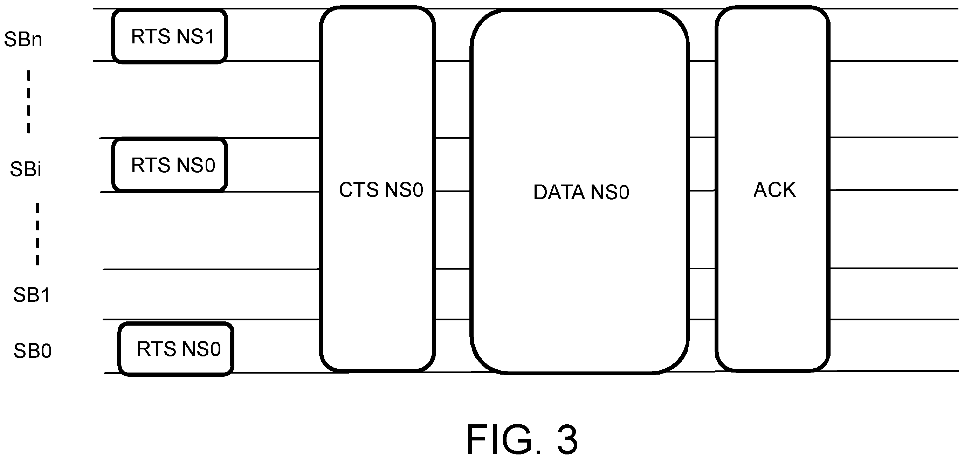

Dans un mode de réalisation illustré par la figure 3, le nombre de messages de requête d'autorisation d'envoi de données sur le canal de communication transmis par le noeud source est fonction d'un niveau de priorité associé au noeud source. Dans l'exemple de la figure 3, le noeud NS0 est de plus haute priorité que le noeud NS1 et transmet alors plus de messages de type RTS que le noeud NS1, à savoir ici deux messages de type RTS « RTS NS0 » (ici sur les sous-bandes SB0 et SBi) alors que le noeud NS1 ne transmet qu'un seul message de type RTS « RTS NS1 » (ici sur la sous-bande SBn). On comprend que le noeud source de haute priorité bénéficie alors de chances plus élevées d'une réception correcte d'un au moins de ses messages de type RTS et dès lors d'un accès plus probable au canal de communication.

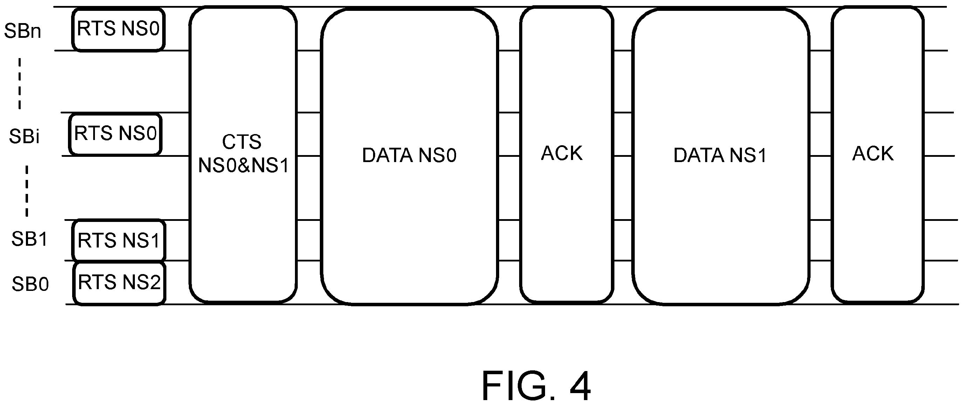

Le noeud destinataire comprend une unité de détection configurée pour détecter des messages simultanés de requête d'autorisation d'envoi de données sur le canal de communication (messages simultanés « RTS NS0 » et « RTS NS1 » sur les figures 1 à 3 ; messages simultanés « RTS NS0 », « RTS NS1 » et « RTS NS2 » sur la figure 4), lesdits messages ayant été transmis par une pluralité de noeuds sources sur une pluralité de sous-bandes. Le noeud destinataire comporte par ailleurs une unité de transmission configurée pour transmettre un message d'autorisation d'envoi de données sur le canal de communication par au moins un noeud source parmi ladite pluralité de noeuds sources « CTS NS0 », « CTS NS0&NS1 ». Le ou les noeuds sources autorisés à transmettre sur le canal de communication procèdent ensuite à l'envoi de leur données « DATA NS0 », « DATA NS1 » sur le canal de communication, c'est-à-dire sur toutes les sous-bandes du canal de communication. Une fois une transmission de données achevée, et en cas de succès de celle-ci, le noeud destinataire envoie un message d'acquittement ACK.

Dans un mode de réalisation, le message d'autorisation d'envoi de données sur le canal de communication par au moins un noeud source parmi ladite pluralité de noeuds sources « CTS NS0 », « CTS NS0&NS1 » est également transmis sur le canal de communication, sur toutes les sous-bandes.

Dans un autre mode de réalisation, le noeud destinataire peut transmettre plusieurs messages d'autorisation d'envoi de données sur le canal de communication par au moins un noeud source parmi ladite pluralité de noeuds sources, chacun desdits messages étant transmis sur une ou plusieurs sous-bandes formant un sous-ensemble dudit ensemble de sous-bandes.

Dans un mode de réalisation, le message d'autorisation d'envoi de données sur le canal de communication par au moins un noeud source parmi ladite pluralité de noeuds sources « CTS NS0 », « CTS NS0&NS1 » comporte un champ indicatif de la disponibilité de chacune des sous-bandes.

Selon l'invention, l'unité de détection du noeud destinataire est configurée pour écouter chacune des sous-bandes et détecter des messages simultanés de requête d'autorisation d'envoi de données provenant d'une pluralité de noeuds sources. Par messages simultanés, on entend des messages émis par des noeuds sources dans un même créneau temporel lorsque les noeuds sources et le noeud destinataire sont synchronisés, ou encore des messages émis par des noeuds sources dans une même fenêtre temporelle débutant à la disponibilité du canal de communication et prenant en considération la durée nécessaire de maintien de la disponibilité avant transmission (type DIFS) ainsi que le délai de propagation des différents noeuds sources.

En référence aux figures 1 à 3, le noeud destinataire peut ainsi détecter deux messages simultanés « RTS NS0 », « RTS NS1 » de requête d'autorisation d'envoi de données sur le canal de communication provenant de deux noeuds sources NS0, NS1. Dans le cadre d'un protocole CSMA/CA conventionnel, les deux messages auraient été simultanément transmis sur le canal de communication où ils seraient entrés en collision, de sorte qu'aucun des deux noeuds source n'aurait pu transmettre. Dans le cadre de l'invention, le risque de collision est fortement diminué puisque les messages sont chacun transmis sur une sous-bande. Et ce risque est bien entendu d'autant plus faible que le nombre de sous-bandes est important. La probabilité de collision de messages RTS simultanés étant réduite, la performance globale du système se trouve améliorée.

En revanche, en cas de messages simultanément transmis sur une même sous-bande, ces messages rentrent en collision, et ne peuvent dont être entendus par le noeud destinataire.

Dans un mode de réalisation, le noeud destinataire réalise une sélection aléatoire d'un ou plusieurs noeuds sources parmi la pluralité de noeuds sources ayant simultanément transmis sur une ou plusieurs sous-bandes un message de requête d'autorisation d'envoi de données sur le canal de communication.

Dans un autre mode de réalisation, le noeud destinataire réalise une sélection basée sur un niveau de priorité associé à chaque noeud source d'un ou plusieurs noeuds sources parmi la pluralité de noeuds sources ayant simultanément transmis sur une ou plusieurs sous-bandes un message requête d'autorisation d'envoi de données sur le canal de communication (en venant par exemple sélectionner le ou les noeuds sources de plus haute priorité, de manière à leur assurer un certain niveau de qualité de service).

En référence aux figures 1 à 3 illustrant un premier mode de réalisation de l'invention, un seul noeud source NS0 est sélectionné (aléatoirement ou du fait de son niveau de priorité) et un message d'autorisation d'envoi de données sur le canal de communication par le noeud source sélectionné « CTS NS0 » est transmis sur l'ensemble du canal de communication. Après réception du message d'autorisation d'envoi de données « CTS NS0 », le noeud source sélectionné NS0 transmet ses données « DATA NS0» sur l'ensemble du canal de communication puis attend un message d'acquittement de réception « ACK » transmis par le noeud destinataire également sur l'ensemble du canal de communication.

Selon un deuxième mode de réalisation de l'invention, l'envoi des données d'un ensemble de noeuds sources pouvant comprendre jusqu'à m noeuds sources est planifié. Si le nombre n de messages simultanés de requête d'autorisation d'envoi de données sur le canal de communication est inférieur au nombre m, alors les n noeuds sources sont sélectionnés. Si au contraire le nombre n de messages de requête d'autorisation d'envoi de données est supérieur à m, le noeud destinataire vient alors sélectionner m noeuds sources parmi n, soit aléatoirement, soit en fonction de leur niveau de priorité.

Le noeud destinataire transmet un message d'autorisation d'envoi de données sur le canal de communication par un ensemble de noeuds sources (ledit ensemble comprenant tout, lorsque n≤m, ou partie, lorsque n>m, des noeuds de ladite pluralité de noeuds sources) incluant un champ indicatif, pour chaque noeud source dudit ensemble, d'une transmission sur le canal de communication immédiate ou différée après écoute d'un ou plusieurs messages d'acquittement de réception transmis par le noeud destinataire sur le canal de communication. En référence à la figure 4, les noeuds sources NS0 et NS1 sont sélectionnés, et le message d'autorisation d'envoi de données sur le canal de communication par les noeuds sources sélectionnés « CTS NS0&NS1 » inclut un champ indiquant une transmission immédiate du premier noeud source NS0 et une transmission différée du second noeud source NS1 après écoute d'un message d'acquittement ACK de réception de données transmis par le noeud destinataire. Ainsi, après réception du message d'autorisation d'envoi de données « CTS NS0&NS1 », le noeud source NS0 transmet ses données « DATA NS0» sur l'ensemble du canal de communication puis attend un message d'acquittement de réception « ACK » transmis par le noeud destinataire, par exemple sur l'ensemble du canal de communication. Après écoute du message d'acquittement, le noeud source NS1 transmet ses données « DATA NS1» puis attend un message d'acquittement de réception « ACK ».

Afin d'étudier les performances de l'invention, on calcule le débit de saturation correspondant au débit sous hypothèse que chaque noeud source a toujours un paquet à transmettre. Comme indiqué dans l'article de G. Bianchi, intitulé "IEEE 802.11-Saturation Throughput Analysis," IEEE Communications Letters, vol. 2, no. 12, pp. 318 -320, dec.1998, le débit S correspond à la fraction de temps où un canal est utilisé pour transmettre avec succès des données de charge utile :

$$s = \frac{Ps.Ptr.L}{Ps.Ptr.Ts + Ptr.(1 - Ps).Tc + (1 - Ptr).Tid}$$

où Ptr correspond à la probabilité d'avoir au moins une transmission sur le créneau temporel considéré,
Ps correspond à la possibilité d'avoir une transmission sans échec,
L est la taille d'un paquet de charge utile moyen,
Ts correspond à la durée moyenne nécessaire pour transmettre un paquet de taille L,
Tc correspond à la durée moyenne d'une collision,
Tid correspond à la durée de la période de disponibilité.

On a Ts=RTS+SIFS+σ+CTS+SIFS+σ+H+L+SIFS+σ+ACK+DIFS+σ, et Tc=RTS+DIFS+σ où H, L et ACK correspondent aux durées de transmission de l'entête du paquet, de la charge utile du paquet et du message d'acquittement, et où σ correspond au délai de propagation.

Les paramètres de protocole et de canal retenus sont ceux spécifiés pour la couche physique 802.11 FH PHY, tandis que la taille minimale $W_{min}$ de la fenêtre de contention est choisie constante et égale à 16.

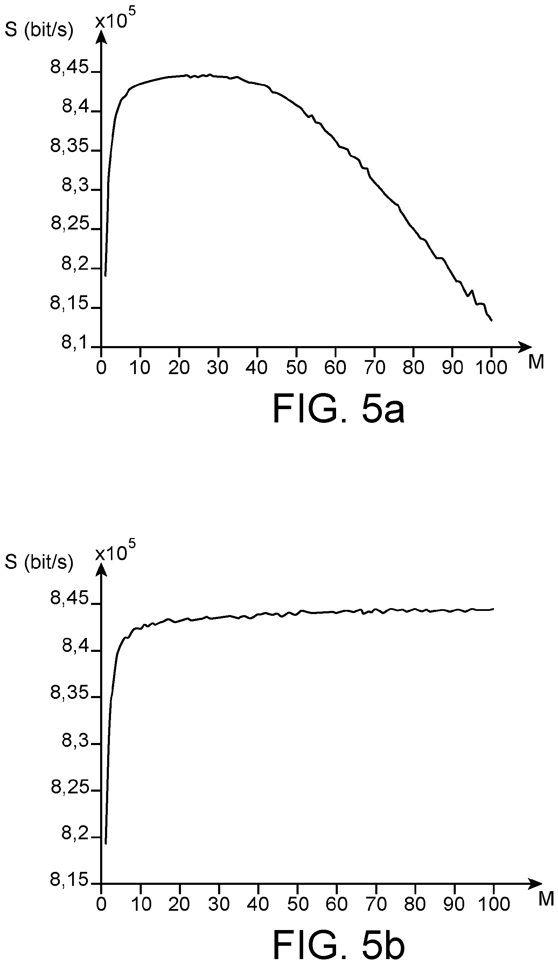

Les figures 5a et 5b représentent le débit de saturation S en fonction du nombre M de noeuds sources dans un système comprenant six sous-bandes avec la transmission, par un noeud source, soit de deux messages de requête d'autorisation d'envoi de données sur le canal de communication sur deux sous-bandes (fig. 5a) soit d'un seul message sur une sous-bande (fig. 5b).

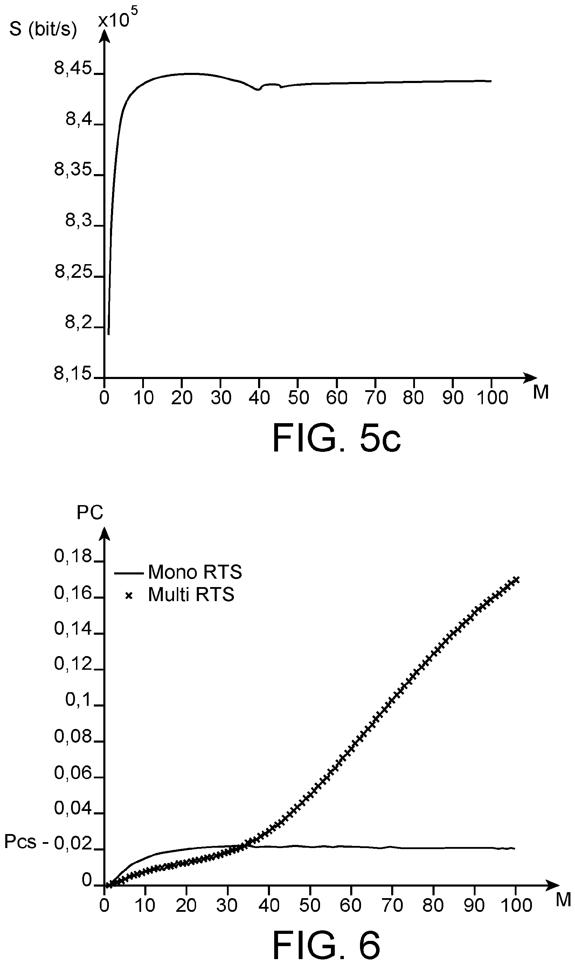

La figure 5c représente le débit de saturation S en fonction du nombre M de noeuds sources dans un système comprenant six sous-bandes dans le cadre d'une variante de l'invention où le nombre de messages de requête d'autorisation d'envoi de données sur le canal de communication transmis par un noeud source dépend du nombre de noeud sources. Plus précisément, lorsque le nombre M de noeuds source est inférieur à 40, chaque noeud source transmet, conformément à l'invention, une pluralité (ici N=2) de messages de type RTS, chacun sur une sous-bande. On réduit ainsi la probabilité de collision entre les noeuds source et on leur donne plus de chances d'accéder au canal de communication. Et, conformément à une variante de réalisation de l'invention, on vient modifier le nombre de messages de type RTS transmis par le noeud source. Dans cet exemple, lorsque le nombre M de noeuds source est supérieur à 40, chaque noeud source ne transmet qu'un seul message de type RTS, sur une sous-bande. La performance globale est alors améliorée, en bénéficiant des performances de la stratégie multi-RTS à nombre de noeuds source réduit et des performances de la stratégie mono-RTS à nombre de noeuds source élevé.

Dans l'exemple ci-dessus, une seule modification du nombre de messages RTS est réalisée. L'invention n'est toutefois pas limitée à ce cas de figure, ni aux exemples de 2 puis 1 messages RTS transmis, mais s'étend d'une manière générale à de multiples modifications du nombre de messages RTS transmis avec au moins un passage par une stratégie multi-RTS.

Dans le cadre de cette variante, le procédé selon l'invention comprend l'évaluation d'une charge du canal de communication, et la modification ou non, en fonction du résultat de ladite évaluation, du nombre de messages de requête d'autorisation d'envoi de données sur le canal de communication transmis par le noeud source suite à la détection de la disponibilité du canal de communication. Cette modification peut le cas échéant s'accompagner d'un changement de la loi de probabilité de distribution utilisée par le noeud source pour sélectionner la ou les sous-bandes pour la transmission du ou des messages de requête d'autorisation d'envoi de données sur le canal de communication.

Comme présenté dans l'exemple ci-dessus, l'évaluation de la charge du canal peut comprendre la détermination du nombre de noeuds source aptes à communiquer avec le noeud destinataire. C'est le cas par exemple lorsque les noeuds source viennent se déclarer auprès du noeud destinataire, ce dernier ayant dès lors connaissance du nombre de noeuds source. Une déclaration peut être réalisée par exemple à l'aide de l'envoi, durant un intervalle de temps dédié et déterminé, d'un préambule de données contenant des informations sur le nouveau noeud source qui vient de se connecter au noeud destinataire.

L'évaluation de la charge du canal peut être réalisée par le noeud destinataire, par exemple en évaluant la vitesse moyenne de décrémentation de son compteur d'attente, une charge du canal importante se traduisant par une faible vitesse de décrémentation. Ou encore par exemple, en venant estimer le nombre de créneaux temporels dits « idle » lors desquels où il n'y aucune transmission ou échange de données entre les noeuds sources et destinataire. La diminution du nombre de ces créneaux peut effectivement être traduite par le fait que le réseau devient de plus en plus chargé.

L'évaluation de la charge du canal peut également comprendre la détermination d'un taux d'échec ou de succès des transmissions, par un noeud source à destination du noeud destinataire, des requêtes d'autorisation d'envoi de données sur le canal de communication. Chaque noeud source peut ainsi être configuré pour calculer son taux moyen de collision sur le canal de communication, où une collision sur le canal de communication survient lorsque les messages de requête d'autorisation d'envoi de données sur le canal de communication transmis par le noeud source sont chacun impliqués dans une collision sur la sous-bande sur laquelle il est transmis. Si ce taux moyen de collision est inférieur à un seuil Pcs, alors le noeud source transmet m0 messages de type RTS, chacun sur une sous-bande. Et si ce taux moyen de collision est supérieur au seuil PCs, alors le noeud source transmet m1 messages de type RTS, chacun sur une sous-bande, avec m1 typiquement inférieur à m0.

La figure 6 représente la probabilité de collision en fonction du nombre de noeuds sources dans un système comprenant six sous-bandes avec la transmission, par un noeud source, soit de deux messages (m0=2) de requête d'autorisation d'envoi de données sur le canal de communication sur deux sous-bandes (courbe Multi RTS), soit d'un seul message (m1=1) sur une sous-bande (courbe Mono RTS). Le seuil PCs peut alors être déterminé comme étant l'intersection de ces deux courbes (avec 6 sous-bandes, m0=2 et m1=1, le seuil PCs est de 0,02).

L'invention n'est pas limitée au procédé tel que décrit précédemment, mais s'étend également à un noeud destinataire d'un réseau de communication à accès multiple à une bande de fréquence d'un canal de communication avec écoute de porteuse et évitement de collision, comprenant :

- une unité de détection configurée pour détecter des messages simultanés de requête d'autorisation d'envoi de données sur le canal de communication provenant d'une pluralité de noeuds source sur une pluralité de sous-bandes,
- une unité de transmission configurée pour transmettre un message d'autorisation d'envoi de données sur le canal de communication par au moins un noeud source parmi ladite pluralité de noeuds source, ledit message comprenant un champ indicatif du nombre de messages de requête d'autorisation d'envoi de données sur le canal de communication devant être transmis, chacun sur une sous-bande du canal de communication, par chacun des noeuds source.

Le message CTS d'autorisation d'envoi de données sur le canal de communication permet ainsi d'informer chacun des noeuds source de la stratégie à utiliser quant au nombre de messages de type RTS à transmettre, cette stratégie pouvant être complétée d'informations relatives à la sélection des sous bandes (type de loi de probabilité de distribution, limitation à un groupe de sous-bandes, etc.).

L'invention porte également sur un noeud source d'un réseau de communication à accès multiple à une bande de fréquence d'un canal de communication avec écoute de porteuse et évitement de collision, ladite bande de fréquence étant découpée en un ensemble de sous-bandes du canal de communication, comprenant une unité de détection configurée pour détecter la disponibilité du canal de communication, caractérisé en ce qu'il comporte une unité de transmission configurée pour transmettre à un noeud destinataire une pluralité de message de requête d'autorisation d'envoi de données sur le canal de communication, chacun sur une sous-bande du canal de communication.

L'invention porte également sur un réseau de communication à accès multiple à une bande de fréquence d'un canal de communication avec écoute de porteuse et évitement de collision, comprenant un noeud destinataire et/ou un noeud source conformes à l'invention.

L'invention s'étend également à un produit programme d'ordinateur comprenant des instructions de code pour l'exécution, lorsque ledit programme est exécuté sur un ordinateur, des étapes de détection, de sélection et de transmission mises en oeuvre par les différentes unités du noeud destinataire. Et l'invention s'étend également à un produit programme d'ordinateur comprenant des instructions de code pour l'exécution, lorsque ledit programme est exécuté sur un ordinateur, des étapes de détection et de transmission mises en oeuvre par les différentes unités du noeud source.

## Revendications

1. Procédé d'accès multiple à une bande de fréquence d'un canal de communication d'un réseau de communication avec écoute de porteuse et évitement de collision, ladite bande de fréquence étant découpée en un ensemble de sous-bandes (SBO, SB1, ..., SBi, ..., SBn) du canal de communication, chaque sous-bande comprenant un ensemble de sous-porteuses, **caractérisé en ce qu'**il comprend à un noeud source :

   suite à la détection de la disponibilité du canal de communication, la transmission à un noeud destinataire de plusieurs messages de requête d'autorisation d'envoi de données sur toutes les sous-bandes du canal de communication (RTS NS0, RTS NS1, RTS NS2), chacun desdits messages étant transmis sur une sous-bande du canal de communication,
   suite à la réception d'un message d'autorisation d'envoi de données sur le canal de communication par le noeud source, la transmission des données au noeud destinataire sur toutes les sous-bandes du canal de communication.

2. Procédé selon la revendication 1, dans lequel le nombre de messages de requête d'autorisation d'envoi de données sur le canal de communication transmis par le noeud source est fonction d'un niveau de priorité associé au noeud source.

3. Procédé selon l'une des revendications 1 et 2, comprenant une sélection, par le noeud source, des sous-bandes sur lesquelles transmettre chacun des messages de requête d'autorisation d'envoi de données sur le canal de communication.

4. Procédé selon l'une des revendications 1 à 3, dans lequel l'ensemble de sous-bandes comporte plusieurs groupes de sous-bandes, et dans lequel le noeud source est associé à un groupe de sous-bandes et réalise la transmission de chacun des messages de requête d'autorisation d'envoi de données sur le canal de communication sur une sous-bande du groupe de sous-bandes associé.

5. Procédé selon l'une des revendications 1 à 4, comprenant l'évaluation d'une charge du canal de communication, et la modification ou non, en fonction du résultat de ladite évaluation, du nombre de messages de requête d'autorisation d'envoi de données sur le canal de communication transmis par le noeud source suite à la détection de la disponibilité du canal de communication.

6. Procédé selon la revendication 5, dans lequel l'évaluation de la charge du canal comprend la détermination du nombre de noeuds source aptes à communiquer avec le noeud destinataire.

7. Procédé selon la revendication 5, dans lequel l'évaluation de la charge du canal comprend la détermination d'un taux d'échec ou de succès des transmissions par le noeud source à destination du noeud destinataire des requêtes d'autorisation d'envoi de données sur le canal de communication.

8. Procédé selon la revendication 7, dans lequel le taux d'échec est un taux moyen de collision sur le canal de communication, où une collision sur le canal de communication survient lorsque les messages de requête d'autorisation d'envoi de données sur le canal de communication transmis par le noeud source sont chacun impliqués dans une collision sur la sous-bande sur laquelle il est transmis.

9. Procédé selon l'une des revendications 1 à 8, comprenant au noeud destinataire :

   - la détection de messages simultanés de requête d'autorisation d'envoi de données sur le canal de communication (RTS NS0, RTS NS1, RTS NS2) transmis par une pluralité de noeuds source (NSO, NS1, NS2) sur une pluralité de sous-bandes,
   - la transmission d'un message d'autorisation d'envoi de données sur le canal de communication par au moins un noeud source parmi ladite pluralité de noeuds source (CTS NS0, CTS NS0&NS1).

10. Procédé selon la revendications 9, dans lequel le noeud destinataire transmet un message d'autorisation d'envoi de données par un ensemble de noeuds sources (CTS NS0&NS1), ledit ensemble de noeuds sources comprenant tout ou partie des noeuds de ladite pluralité de noeuds sources (NSO, NS1, NS2), ledit message incluant un champ indicatif, pour chaque noeud source dudit ensemble de noeuds sources, d'une transmission sur toutes les sous-bandes du canal de communication immédiate ou différée après écoute d'un ou plusieurs messages d'acquittement (ACK) de réception transmis par le noeud destinataire sur toutes les sous-bandes du canal de communication.

11. Procédé selon l'une des revendications 1 à 10, dans lequel le message d'autorisation d'envoi de données sur le canal de communication par ledit au moins un noeud source sélectionné comprend un champ indicatif de la disponibilité des sous-bandes.

12. Procédé d'accès multiple à une bande de fréquence d'un canal de communication d'un réseau de communication avec écoute de porteuse et évitement de collision, ladite bande de fréquence étant découpée en un ensemble de sous-bandes (SBO, SB1, ..., SBi, ...SBn) du canal de communication, comprenant à un noeud destinataire :

   - la détection de messages simultanés de requête d'autorisation d'envoi de données sur toutes les sous-bandes du canal de communication (RTS NS0, RTS NS1, RTS NS2) transmis par une pluralité de noeuds source sur une pluralité de sous-bandes ;
   - la transmission d'un message d'autorisation d'envoi de données sur toutes les sous-bandes du canal de communication par au moins un noeud source (CTS NSO, CTS NS0&NS1) parmi ladite pluralité de noeuds source, ledit message comprenant un champ indicatif du nombre de messages de requête d'autorisation d'envoi de données sur le canal de communication devant être transmis, chacun sur une sous-bande du canal de communication, par chacun des noeuds source.

13. Noeud destinataire d'un réseau de communication à accès multiple à une bande de fréquence d'un canal de communication avec écoute de porteuse et évitement de collision, ladite bande de fréquence étant découpée en un ensemble de sous-bandes du canal de communication, comprenant :

   - une unité de détection configurée pour détecter des messages simultanés de requête d'autorisation d'envoi de données sur toutes les sous-bandes du canal de communication (RTS NS0, RTS NS1, RTS NS2) provenant d'une pluralité de noeuds sources (NSO, NS1, NS2) sur une pluralité de sous-bandes de la bande de fréquence du canal de communication,
   - une unité de transmission configurée pour transmettre un message d'autorisation d'envoi de données sur le canal de communication par au moins un noeud source parmi ladite pluralité de noeuds source (CTS NS0, CTS NS0&NS1), ledit message comprenant un champ indicatif du nombre de messages de requête d'autorisation d'envoi de données sur le canal de communication devant être transmis, chacun sur une sous-bande du canal de communication, par chacun des noeuds source.

14. Noeud source d'un réseau de communication à accès multiple à une bande de fréquence d'un canal de communication avec écoute de porteuse et évitement de collision, ladite bande de fréquence étant découpée en un ensemble de sous-bandes (SBO, SB1, ..., SBi, ...SBn) du canal de communication, comprenant une unité de détection configurée pour détecter la disponibilité du canal de communication, **caractérisé en ce qu'**il comporte une unité de transmission configurée pour, suite à la détection de la disponibilité du canal de communication, transmettre à un noeud destinataire une pluralité de message de requête d'autorisation d'envoi de données sur toutes les sous-bandes du canal de communication, chacun sur une sous-bande du canal de communication et pour transmettre, suite à la réception d'un message d'autorisation d'envoi de données sur le canal de communication par le noeud source, la transmission des données au noeud destinataire sur toutes les sous-bandes du canal de communication.

15. Produit programme d'ordinateur comprenant des instructions de code pour l'exécution des étapes du procédé selon l'une des revendications 1 ou 12 lorsque ledit programme est exécuté sur un ordinateur.


**Patentansprüche**

1. Verfahren zum multiplen Zugang zu einem Frequenzband eines Kommunikationskanals eines Kommunikationsnetzwerks mit Trägerhören und Kollisionsvermeidung, wobei das Frequenzband in eine Gesamtheit von Unterbändern (SBO, SB1, ..., SBi, ..., SBn) des Kommunikationskanals unterteilt ist, wobei jedes Unterband eine Gesamtheit von Unterträgern umfasst, **dadurch gekennzeichnet, dass** es an einem Quellenknoten umfasst:

im Anschluss an die Erfassung der Verfügbarkeit des Kommunikationskanals, die Übertragung, an einen Zielknoten, von mehreren Nachrichten zur Autorisationsanfrage zur Datenübermittlung auf allen Unterbändern des Kommunikationskanals (RTS NS0, RTS NS1, RTS NS2), wobei jede der Nachrichten auf einem Unterband des Kommunikationskanals übertragen wird,
im Anschluss an den Empfang einer Nachricht zur Autorisierung der Datenübermittlung auf dem Kommunikationskanal durch den Quellenknoten, die Übertragung der Daten an den Zielknoten auf allen Unterbändern des Kommunikationskanals.

2. Verfahren nach Anspruch 1, wobei die Zahl von Nachrichten zur Autorisationsanfrage zur Datenübermittlung auf dem Kommunikationskanal, die durch den Quellenknoten übertragen wird, eine Funktion eines Prioritätsniveaus ist, das dem Quellenknoten zugeordnet ist.

3. Verfahren nach einem der Ansprüche 1 und 2, umfassend eine Auswahl, durch den Quellenknoten, der Unterbänder, auf denen jede der Nachrichten zur Autorisationsanfrage zur Datenübermittlung auf dem Kommunikationskanal zu übertragen ist.

4. Verfahren nach einem der Ansprüche 1 bis 3, bei dem die Gesamtheit von Unterbändern mehrere Gruppen von Unterbändern umfasst, und bei dem der Quellenknoten einer Gruppe von Unterbändern zugeordnet ist und die Übertragung von jeder der Nachrichten zur Autorisationsanfrage zur Datenübermittlung auf dem Kommunikationskanal auf einem Unterband der zugeordneten Gruppe von Unterbändern realisiert.

5. Verfahren nach einem der Ansprüche 1 bis 4, umfassend die Bewertung einer Last des Kommunikationskanals und wohl oder nicht die Modifikation, als Funktion des Ergebnisses der Bewertung, der Zahl von Nachrichten zur Autorisationsanfrage zur Datenübermittlung auf dem Kommunikationskanal, die durch den Quellenknoten übertragen werden, im Anschluss an die Erfassung der Verfügbarkeit des Kommunikationskanals.

6. Verfahren nach Anspruch 5, bei dem die Bewertung der Last des Kanals die Bestimmung der Zahl von Quellenknoten umfasst, die dazu ausgelegt sind, mit dem Zielknoten zu kommunizieren.

7. Verfahren nach Anspruch 5, bei dem die Bewertung der Last des Kanals die Bestimmung einer Misserfolgs- oder Erfolgsrate der Übertragungen, durch den Quellenknoten in Richtung des Zielknotens, der Autorisationsanfragen zur Datenübermittlung auf dem Kommunikationskanal umfasst.

8. Verfahren nach Anspruch 7, bei dem die Misserfolgsrate eine mittlere Kollisionsrate auf dem Kommunikationskanal ist, wo eine Kollision auf dem Kommunikationskanal auftritt, wenn die Nachrichten zur Autorisationsanfrage zur Datenübermittlung auf dem Kommunikationskanal, die durch den Quellenknoten übertragen werden, jeweils in eine Kollision auf dem Unterband involviert sind, auf dem sie übertragen werden.

9. Verfahren nach einen der Ansprüche 1 bis 8, umfassend am Zielknoten:

   - die Erfassung von gleichzeitigen Nachrichten zur Autorisationsanfrage zur Datenübermittlung auf dem Kommunikationskanal (RTS NS0, RTS NS1, RTS NS2), die durch eine Mehrzahl von Quellenknoten (NS0, NS1, NS2) auf einer Mehrzahl von Unterbändern übertragen werden,
   - die Übertragung einer Nachricht zur Autorisierung der Datenübermittlung auf dem Kommunikationskanal durch wenigstens einen Quellenknoten aus der Mehrzahl von Quellenknoten (CTS NS0, CTS NSO&NS1).

10. Verfahren nach Anspruch 9, bei dem der Zielknoten eine Nachricht zur Autorisierung zur Datenübermittlung durch eine Gesamtheit von Quellenknoten (CTS NSO&NS1) überträgt, wobei die Gesamtheit von Quellenknoten alle oder einen Teil der Knoten aus der Mehrzahl von Quellenknoten (NSO, NS1, NS2) umfasst, wobei die Nachricht ein Feld enthält, das für jeden Quellenknoten aus der Gesamtheit von Quellenknoten auf eine sofortige oder aufgeschobene Übertragung auf allen Unterbändern des Kommunikationskanals nach einem Hören von einer oder mehr Empfangsbestätigungsnachrichten (ACK) hinweist, die durch den Zielknoten auf allen Unterbändern des Kommunikationskanal übertragen wird/werden.

11. Verfahren nach einem der Ansprüche 1 bis 10, bei dem die Nachricht zur Autorisierung der Datenübermittlung auf dem Kommunikationskanal durch den wenigstens einen ausgewählten Quellenknoten ein Feld umfasst, das auf die Verfügbarkeit der Unterbänder hinweist.

12. Verfahren zum multiplen Zugang zu einem Frequenzband eines Kommunikationskanals eines Kommunikationsnetzes mit Trägerhören und Kollisionsvermeidung, wobei das Frequenzband in eine Gesamtheit von Unterbändern (SBO, SB1, ..., SBi, ..., SBn) des Kommunikationskanals unterteilt ist, umfassend an einem Zielknoten:

   - die Erfassung von gleichzeitigen Nachrichten zur Autorisationsanfrage zur Datenübermittlung auf allen Unterbändern des Kommunikationskanals (RTS NS0, RTS NS1, RTS NS2), die durch eine Mehrzahl von Quellenknoten auf einer Mehrzahl von Unterbändern übertragen werden;
   - die Übertragung einer Nachricht zur Autorisierung der Datenübermittlung auf allen Unterbändern des Kommunikationskanals durch wenigstens einen Quellenknoten (CTS NS0, CTS NSO&NS1) aus der Mehrzahl von Quellenknoten, wobei die Nachricht ein Feld umfasst, das auf die Zahl von Nachrichten zur Autorisationsanfrage zur Datenübermittlung auf dem Kommunikationskanal hinweist, die übertragen werden sollen, jede auf einem Unterband des Kommunikationskanals, durch jeden der Quellenknoten.

13. Zielknoten eines Kommunikationsnetzes mit multiplem Zugang zu einem Frequenzband eines Kommunikationskanals mit Trägerhören und Kollisionsvermeidung, wobei das Frequenzband in eine Gesamtheit von Unterbändern des Kommunikationskanals unterteilt ist, umfassend:

   - eine Erfassungseinheit, die dazu ausgelegt ist, gleichzeitige Nachrichten zur Autorisationsanfrage zur Datenübermittlung auf allen Unterbändern des Kommunikationskanals (RTS NS0, RTS NS1, RTS NS2) zu erfassen, die von einer Mehrzahl von Quellenknoten (NSO, NS1, NS2) stammen, auf einer Mehrzahl von Unterbändern des Frequenzbands des Kommunikationskanals;
   - eine Übertragungseinheit, die dazu ausgelegt ist, eine Nachricht zur Autorisierung der Datenübermittlung auf dem Kommunikationskanal durch wenigstens einen Quellenknoten aus der Mehrzahl von Quellenknoten (CTS NS0, CTS NS0&NS1) zu übertragen, wobei die Nachricht ein Feld enthält, das auf die Zahl von Nachrichten zur Autorisationsanfrage zur Datenübermittlung auf dem Kommunikationskanal hinweist, die übertragen werden sollen, jede auf einem Unterband des Kommunikationskanals, durch jeden der Quellenknoten.

14. Quellenknoten eines Kommunikationsnetzes mit multiplem Zugang zu einem Frequenzband eines Kommunikationskanals mit Trägerhören und Kollisionsvermeidung, wobei das Frequenzband in eine Gesamtheit von Unterbändern (SBO, SB1, ..., SBi, ..., SBn) des Kommunikationskanals unterteilt ist, umfassend eine Erfassungseinheit, die dazu ausgelegt ist, die Verfügbarkeit des Kommunikationskanals zu erfassen, **dadurch gekennzeichnet, dass** er eine Übertragungseinheit umfasst, die dazu ausgelegt ist, im Anschluss an die Erfassung der Verfügbarkeit des Kommunikationskanals an einen Zielknoten eine Mehrzahl von Nachrichten zur Autorisationsanfrage zur Datenübermittlung auf allen Unterbändern des Kommunikationskanals zu übertragen, jede auf einem Unterband des Kommunikationskanals, und im Anschluss an den Empfang einer Nachricht zur Autorisierung der Datenübermittlung auf dem Kommunikationskanal durch den Quellenknoten die Übertragung der Daten an den Zielknoten auf allen Unterbändern des Kommunikationskanals zu übertragen.

15. Computerprogrammprodukt, umfassend Codebefehle zur Durchführung der Schritte des Verfahrens nach einem der Ansprüche 1 oder 12, wenn das Programm auf einem Computer ausgeführt wird.

**Claims**

1. Multiple access method to a frequency band of a communication channel of a communication network with carrier sensing and collision avoidance, said frequency band being broken down into a set of sub-bands (SBO, SB1, ..., SBi, ..., SBn) of the communication channel, each sub-band comprising a set of sub-carriers, **characterised in that** it comprises at a source node:

   after it has been detected that the communication channel is available, the transmission to a destination node of several request to send messages on all the sub-bands of the communication channel (RTS NS0, RTS NS1, RTS NS2), each of said messages being sent on a sub-band of the communication channel,
   after reception of a clear to send message on the communication channel by the source node, the transmission of data to the destination node on all the sub-bands of the communication channel.

2. Method according to claim 1, in which the number of request to send messages on the communication channel transmitted by the source node depends on a level of priority associated with the source node.

3. Method according to one of claims 1 and 2, comprising a selection by the source node, of the sub-bands on which each request to send message is sent on the communication channel.

4. Method according to one of claims 1 to 3, in which the set of sub-bands includes several groups of sub-bands, and in which the source node is associated with a group of sub-bands and performs the transmission of each request to send message on the communication channel on a sub-band of the group of associated sub-bands.

5. Method according to one of claims 1 to 4, comprising evaluation of a communication channel load, and whether or not the number of request to send messages on the communication channel transmitted by the source node is modified after it has been detected that the communication channel is available, depending on the result of said evaluation.

6. Method according to claim 5, in which evaluation of the channel load includes determination of the number of source nodes capable of communicating with the destination node.

7. Method according to claim 5, in which the evaluation of the channel load includes determination of a failure or success rate of transmissions of request to send messages on the communication channel by the source node to the destination node.

8. Method according to claim 7, in which the failure rate is an average collision rate on the communication channel, in which a collision on the communication channel occurs when request to send messages on the communication channel transmitted by the source node are all involved in a collision on the sub-band on which they are sent.

9. Method according to one of claims 1 to 8, comprising at the destination node:

   - detection of simultaneous request to send messages on the communication channel (RTS NS0, RTS NS1, RTS NS2) sent by a plurality of source nodes (NSO, NS1, NS2) on a plurality of sub-bands,
   - transmission of a clear to send message on the communication channel through at least one source node among said plurality of source nodes (CTS NS0, CTS NS0&NS1).

10. Method according to claim 9, in which the destination node sends a request to send message by a set of source nodes (CTS NS0&NS1), said set of source nodes comprising all or some of the nodes in said plurality of source nodes (NSO, NS1, NS2), said message including an information field indicating, for each source node in said set of source nodes, an immediate or delayed transmission on all the sub-bands of the communication channel after sensing one or several acknowledgment messages (ACK) sent by the destination node on all the sub-bands of the communication channel.

11. Method according to one of claims 1 to 10, in which the clear to send message on the communication channel by said at least one selected source node includes an information field indicating the availability of the sub-bands.

12. Multiple access method to a frequency band of a communication channel of a communication network with carrier sensing and collision avoidance, said frequency band being broken down into a set of sub-bands (SBO, SB1, ..., SBi, ...SBn) of the communication channel, comprising the following at a destination node:

- detection of simultaneous request to send messages on all the sub-bands of the communication channel (RTS NS0, RTS NS1, RTS NS2) transmitted by a plurality of source nodes on a plurality of sub-bands;
- transmission of a clear to send message on all the sub-bands of the communication channel through at least one source node (CTS NS0, CTS NS0&NS1) among said plurality of source nodes, said message including an information field giving the number of request to send messages to be sent by each source node on the communication channel, each on a sub-band of the communication channel.

13. Destination node in a multiple access communication network with one frequency band of a communication channel with carrier sensing and collision avoidance, said frequency band being broken down into a set of sub-bands of the communication channel, including:

- a detection unit configured to detect simultaneous request to send messages on all the sub-bands of the communication channel (RTS NS0, RTS NS1, RTS NS2) originating from a plurality of source nodes (NSO, NS1, NS2) on a plurality of sub-bands of the frequency band of the communication channel,
- a transmission unit configured to transmit a clear to send message on the communication channel through at least one source node among said plurality of source nodes (CTS NS0, CTS NS0&NS1), said message including an information field giving the number of request to send messages on the communication channel that each source node should transmit, each on a sub-band of the communication channel.

14. Source node in a multiple access communication network with one frequency band of a communication channel with carrier sensing and collision avoidance, said frequency band being broken down into a set of sub-bands (SBO, SB1, ..., SBi, ...SBn) of the communication channel, including a detection unit configured to detect availability of the communication channel, **characterised in that** it comprises a transmission unit configured to, after it has been detected that the communication channel is available, transmit a plurality of request to send messages on all the sub-bands of the communication channel to a destination node, each on one sub-band of the communication channel and to transmit, after reception of a clear to send message on the communication channel by the source node, data to the destination node on all the sub-bands of the communication channel.

15. Computer program product containing code instructions to execute the steps of the method according to one of claims 1 or 12 when said program is executed on a computer.

FIG. 1

SBn — RTS NS1

SBi — RTS NS0

SB1 — RTS NS1

SB0 — RTS NS0

CTS NS0

DATA NS0

ACK

EP 2 871 903 B1

| SBn | RTS NS1 | | | | |
| SBi | RTS NS0 | RTS NS1 | CTS NS0 | DATA NS0 | ACK |
| SB1 | | | | | |
| SB0 | RTS NS0 | | | | |

**FIG. 2**

FIG. 3

EP 2 871 903 B1

FIG. 4

FIG. 5a

FIG. 5b

FIG. 5c

FIG. 6

FIG. 7

**EP 2 871 903 B1**
## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20090196273 A1
- US 2011317633 A1

- FR 1356518

**Littérature non-brevet citée dans la description**

- **J. W. CHONG ; Y. SUNG ; D. K. SUNG.** RawPEACH: Multiband CSMA/CA-Based Cognitive Radio Networks. *Communications and Networks, Journal of,* 2009, vol. 11 (2), 175-186

- Group Contention-Based OFDMA MAC Protocol for Multiple Access Interference-Free in WLAN Systems. **JUNWOO JUNG et al.** IEEE TRANSACTIONS ON WIRELESS COMMUNICATIONS. IEEE SERVICE CENTER, 01 Février 2012, vol. 11
- **G. BIANCHI.** IEEE 802.11-Saturation Throughput Analysis. *IEEE Communications Letters,* Décembre 1998, vol. 2 (12), 318-320